# EUROPEAN PATENT APPLICATION

(11) **EP 0 892 135 A1**
(43) Date of publication of application: **20.01.1999**
(21) Application number: 98113525.4
(22) Date of filing: 20.07.1998
(51) Int. Cl.: E05B 65/20, F16B 2/06

(54) **Connecting device for connecting a pair of rods, and a tie fitted with such a connecting device**

(30) Priority: 18.07.1997 IT TO970653
(71) Applicant: Valeo Sicurezza Abitacolo S.p.A., 10026 Santena (IT)
(72) Inventor: Dal Palu', Attilio, 10098 Rivoli (IT)
(74) Representative: Cerbaro, Elena

(57) **Abstract**

A connecting device (10) for connecting a pair of rods (2)(3) has a connecting element (11) with a respective axis (8), and, for each rod (2)(3), a respective connecting assembly (17,19,24)(26) for connecting an end portion (6)(7) of the rod (2)(3) to the connecting element (11); each connecting assembly having a seat (19)(28) extending crosswise to the axis (8) of the connecting element (11) and engaged by an anchoring portion of the respective rod (2)(3), and a releasable retaining assembly (17,24)(27,29a) for retaining the anchoring portion (9)(9a) inside the seat (19)(28) and for retaining an intermediate portion (18)(29) of the end portion (6)(7) of the respective rod (2)(3) in a position substantially parallel to the axis (8) of the connecting element (11).

## Description

The present invention relates to a connecting device for connecting a pair of rods, and to a tie fitted with such a connecting device.

Ties in general, and particularly ties for activating vehicle locks, are known to comprise a pair of rods, each having a first curved hook-on end portion and a second end portion connected to the second end portion of the other rod.

The second end portions of the rods are normally connected by means of a connecting device comprising an intermediate connecting element and, for each rod, a screw-nut screw assembly normally comprising a nut and locknut.

Though widely used, by being fairly straightforward and inexpensive, known connecting devices of the above type fail to ensure a precise fixed angular position of the rods with respect to the connecting element, and therefore a definite angular position of the first curved hook-on portions of the rods with respect to each other, thus resulting in difficulties when assembling the tie.

By way of a solution to the problem, the connecting element is molded from plastic material, and the second end portions of the rods are connected by molding them to the connecting element. Besides allowing no adjustment to the length of the tie, e.g. during assembly, such a method calls for fairly complex molding equipment capable, regardless of the length and shape of the rods, of accurately positioning and maintaining the rods in fixed mutual positions pending completion of the molding operation.

It is an object of the present invention to provide a connecting device designed to eliminate the aforementioned drawbacks.

According to the present invention, there is provided a connecting device for connecting a pair of rods; the device comprising a connecting element having a respective axis, and, for each said rod, connecting means for connecting an end portion of the rod to the connecting element; characterized in that said connecting means comprise a first seat extending in a direction crosswise to said axis and engaged positively by an anchoring portion of the end portion of the respective said rod; and releasable retaining means for retaining said anchoring portion inside said first seat and for retaining an intermediate portion of the respective end portion in a position substantially parallel to said axis.

A non-limiting embodiment of the invention will be described by way of example with reference to the accompanying drawings, in which:
Figure 1 shows an exploded view in perspective of a tie featuring a preferred embodiment of a connecting device in accordance with the present invention;
Figure 2 shows a larger-scale section along line II-II in Figure 1;
Figure 3 shows a larger-scale section along line III-III in Figure 1.

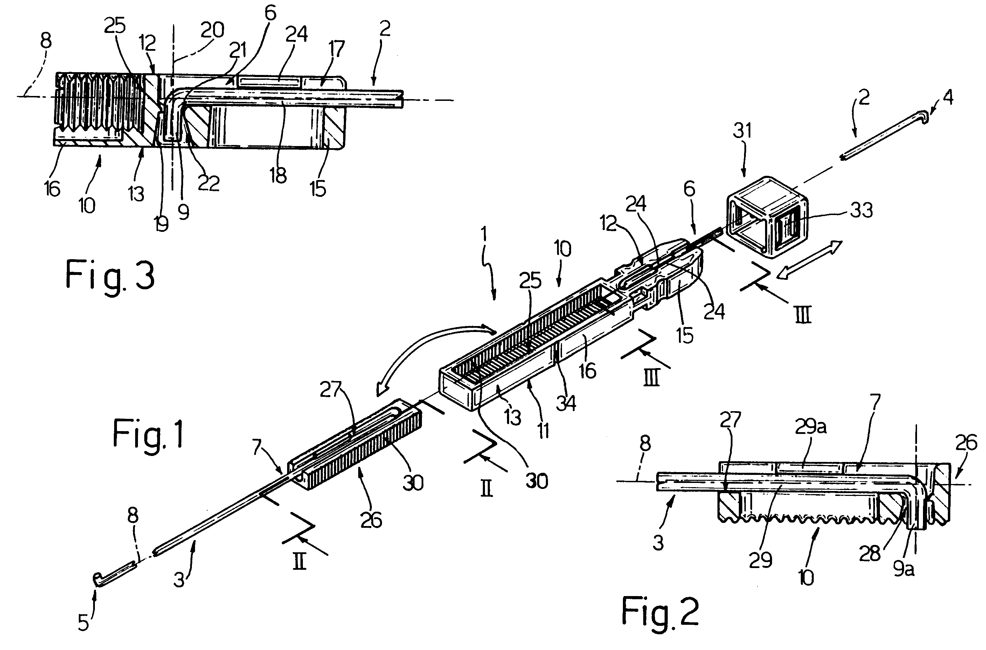

Number 1 in Figure 1 indicates as a whole a tie, particularly for activating a lock (not shown) of a vehicle door (not shown).

Tie 1 comprises two circular-section rods 2 and 3 having respective curved hook-on end portions 4 and 5 and respective opposite end portions 6 and 7. Portions 6 and 7 extend towards each other coaxially with a longitudinal axis 8, and terminate with respective anchoring portions 9 and 9a extending perpendicularly to axis 8 (Figures 2 and 3).

With reference to Figure 1, tie 1 also comprises a releasable connecting device 10 for releasably and adjustably connecting end portions 6 and 7.

Device 10 comprises an elongated, substantially prismatic body 11 having a respective axis coincident with axis 8, and which is defined laterally by two flat surfaces 12 and 13 parallel to each other and to axis 8. Body 11 in turn comprises two aligned portions 15 and 16, of which portion 15 is an end portion for securing portion 6 of rod 2. More specifically, and as shown in Figure 3, portion 15 comprises a longitudinal groove 17, which extends along axis 8, has an opening formed in surface 12, and houses a straight portion 18 of portion 6. Groove 17 is defined by a bottom surface, and by two lateral surfaces facing each other and separated by a distance approximately equal to but no smaller than the diameter of portion 6.

Groove 17 communicates with a variable-section conduit 19 formed adjacent to portion 16, and which extends coaxially with an axis 20 perpendicular to axis 8, and defines a seat for housing anchoring portion 9 of rod 2. More specifically, conduit 19 comprises an input portion 21 tapering towards surface 13 so as to have a minimum section approximately equal to but no smaller than the section of portion 9, and so prevent portion 6 from moving along axis 8. Conduit 19 also comprises an output portion 22 flaring towards surface 13 and having longitudinally elongated sections, perpendicular to axis 20, greater than said minimum section and of respective transverse dimensions - i.e. measured perpendicularly to axes 8 and 20 - equal to one another and approximately equal to but no smaller than the outside diameter of portion 9, so as to prevent portion 9 from rotating about axis 8.

End portion 6 is retained inside groove 17 and conduit 19 by a pair of facing teeth 24, which extend towards each other inside groove 17, and combine with groove 17 to define a snap-on retaining device.

As shown in Figure 1 and particularly in Figure 3, portion 16 of body 11 comprises a cavity 25, which extends along axis 8 and houses a prismatic element 26 for anchoring portion 7 to body 11.

Element 26 has a groove 27 and a conduit 28 for respectively housing a portion 29 and portion 9a of portion 7. In the example described, groove 27 and conduit 28 are positioned in the same way and the same shape and size as groove 17 and conduit 19; and two teeth 29a, similar to teeth 24, project inside groove 27 and cooperate with groove 27 and conduit 28 to prevent portion 7 of rod 3 from rotating or shifting with respect to element 26.

Element 26 engages cavity 25, is connected to portion 16 by a toothed coupling 30, and is retained inside cavity 25 by a collar 31 surrounding and connected to portion 16 in sliding manner along axis 8 to partially close cavity 25. In actual use, collar 31 is maintained in a fixed axial retaining position by a pair of elastic blades 33, which are carried by collar 31 and each forced inside a respective recess 34 formed in portion 16.

Tie 1 is assembled by inserting portions 9 and 9a inside respective conduits 19 and 28; rods 2 and 3 are then rotated about an axis perpendicular to axis 8, and portions 18 and 29 are clicked between respective teeth 24 and 29a into respective grooves 17 and 27; element 26 is inserted inside cavity 25; and collar 31, moved beforehand into a position adjacent to portion 16, is moved axially so that blades 33 engage recesses 34 and a portion of collar 31 is positioned over element 26.

The characteristics of connecting device 10 of tie 1 as described therefore provide for stably connecting rods 2 and 3, and for arranging and maintaining rods 2 and 3 in definite fixed angular and axial positions with respect to each other.

Moreover, the characteristics of device 10, and in particular the provision of element 26 and toothed coupling 30, provide for adjusting the distance between rods 2 and 3 along axis 8, and therefore producing a tie of adjustable length.

Finally, the characteristics of device 10 also provide for rapidly connecting rods of any length and shape.

Clearly, changes may be made to tie 1 as described and illustrated herein without, however, departing from the scope of the present invention. In particular, different solutions may be used to lock portions 9 and 9a of portions 6 and 7 inside respective conduits 19 and 28 or to connect element 26 to body 11; and conduits 19, 28 and grooves 17, 27 may be shaped differently from those described by way of example, and may be located differently with respect to one another.

## Claims

1. A connecting device (10) for connecting a pair of rods (2)(3); the device comprising a connecting element (11) having a respective axis (8), and, for each said rod (2)(3), connecting means (17, 19, 24) (26) for connecting an end portion (6)(7) of the rod (2)(3) to the connecting element (11); characterized in that said connecting means comprise a first seat (19)(28) extending in a direction (20) crosswise to said axis (8) and engaged positively by an anchoring portion (9)(9a) of the end portion (6)(7) of the respective said rod (2)(3); and releasable retaining means (17,24)(27,29a) for retaining said anchoring portion (9)(9a) inside said first seat (19)(28) and for retaining an intermediate portion (18)(29) of the respective end portion (6)(7) in a position substantially parallel to said axis (8).

2. A device as claimed in Claim 1, characterized in that said retaining means (17,24)(27,29a) are click-on retaining means.

3. A device as claimed in Claim 1 or 2, characterized in that said first seat (19)(28) is flared in said direction (20) and has at least one smaller cross section approximately equal to but no smaller than the section of the respective said anchoring portion (9)(9a), and a number of larger cross sections elongated in directions substantially parallel to said axis (8).

4. A device as claimed in any one of the foregoing Claims, characterized in that said retaining means (17,24)(27,29a) comprise a second seat (17)(27) extending in a direction substantially parallel to said axis (8) and for housing the intermediate portion (18)(29) of the respective said end portion (6)(7).

5. A device as claimed in Claim 4, characterized in that said retaining means (17,24)(27,29a) also comprise at least one tooth (24)(29a) projecting inside at least one of said seats (19)(28)(17)(27).

6. A device as claimed in Claim 5, characterized in that said tooth (24)(29a) projects inside said second seat (17)(27).

7. A device as claimed in any one of the foregoing Claims, characterized in that said connecting element (11) comprises at least one terminal portion (15); and in that said first seat (19) and said retaining means (17, 24) relative to one (2) of said rods (2)(3) are formed directly in said terminal portion (15).

8. A device as claimed in any one of the foregoing Claims, characterized by also comprising a further element (26) separate from said connecting element (11); and in that said first seat (28) and said retaining means (27,29a) relative to one (3) of said rods (2)(3) are formed on said further element (26); coupling means (30, 31) being provided to connect said further element (26) to said connecting element (11).

9. A device as claimed in Claim 8, characterized in that said coupling means (30, 31) are adjustable coupling means for adjusting the position of said connecting element (11) and said further element (26) with respect to each other along said axis (8).

10. A device as claimed in Claim 8 or 9, characterized in that said coupling means (30, 31) are releasable coupling means.

11. A device as claimed in Claim 9 or 10, characterized in that said coupling means (30, 31) comprise toothed coupling means (30), and releasable fastening means (31) for maintaining said toothed coupling means (30) in an engaged position.

12. A device as claimed in Claim 11, characterized in that said connecting element (11) comprises an elongated longitudinal further seat (25), and said further element (26) is housed inside said further seat (25); said fastening means comprising a retaining body (31) at least partly surrounding said connecting element (11) and so extending as to partly close said longitudinal further seat (25).

13. A device as claimed in Claim 12, characterized in that said fastening means (31) also comprise click-on connecting means (33, 34) interposed between said retaining body and said connecting element or said further element.

14. A device as claimed in Claim 13, characterized in that said click-on connecting means (33)(34) comprise at least one recess (34) formed on one of said connecting element (11) or said retaining body (31); and at least one elastically deformable blade (33) for positively engaging said recess (34) and carried on the other of said connecting element (11) or said retaining body (31).

15. A device as claimed in one of the foregoing Claims from 12 to 14, characterized in that said retaining body (31) is connected to said connecting element (11) in sliding manner along said axis (8).

16. A tie (1) comprising a pair of rods (2)(3) having respective adjacent, substantially aligned end portions (6)(7), and a connecting device (10) for connecting said end portions (6)(7); characterized in that said connecting device (10) is formed as claimed in any one of the foregoing Claims.
